# EUROPEAN PATENT APPLICATION

(11) **EP 3 643 471 A1**
(43) Date of publication of application: **29.04.2020**
(21) Application number: 19205640.6
(22) Date of filing: 28.10.2019
(51) Int. Cl.: B29B 11/04, B29D 24/00, B32B 3/28, B29C 65/18, B29C 65/26, B29C 65/00, B31F 1/28, B32B 37/00, B32B 37/10, B29D 99/00, B29C 53/26, B29L 24/00, B29C 69/00

(54) **PLASTIC LAMINATED STRUCTURE AND METHOD FOR PRODUCING THE SAME**

(30) Priority: 26.10.2018 JP 2018202329; 26.10.2018 JP 2018202330
(71) Applicant: Morita Giken Inc., Anan-shi Tokushima 774-0015 (JP)
(72) Inventor: SEI, Keisuke, Anan-shi, Tokushima 774-0015 (JP)
(74) Representative: Winter, Brandl, Fürniss, Hübner, Röss, Kaiser, Polte - Partnerschaft mbB

(57) **Abstract**

A plastic laminated structure 1 includes a plate member 2 of plate-shaped fiber-reinforced plastic and a core member 3 of trapezoidal-wave-shaped fiber-reinforced plastic. The plate member 2 includes a thermoplastic resin and reinforcing fibers embedded in the thermoplastic resin. The core member 3 is thermally bonded to the plate member 2, and includes a thermoplastic resin and reinforcing fibers that is embedded in the thermoplastic resin. A part of or the entire area of a main surface of the plate member includes smooth and rough surfaces 2a and 2b, The rough surface 2b has larger roughness than the smooth surface 2a. The smooth and rough surfaces 2a and 2b are alternately arranged in stripes.

## Description

### CROSS-REFERENCE TO RELATED APPLICATIONS

The present application claims priority under 35 U. S. C. §119 to Japanese Patent Applications No. 2018-202 329, filed on October 26, 2018, and No. 2018-202 330, filed on October 26, 2018, the contents of which are incorporated herein by reference in their entirety.

### BACKGROUND OF THE INVENTION

### 1. Field of the Invention

The present invention relates to a plastic laminated structure that includes a wave-shaped core member and a plate member coupled to the core member, and a method for producing the plastic laminated structure.

### 2. Description of the Related Art

Plastic laminated structures that include a wave-shaped core member and a plate member coupled to the core member have been developed (see Japanese Patent Publication Nos. JP 2003-1 735 A, JP H06-170 993 A (1994), and JP H07-148 867 A (1995)).

Such a plastic laminated structure (corrugated plastic) that includes a wave-shaped core member and a plate member thermally bonded to a surface of the core member can be formed thick because air layers are provided in the plastic laminated structure. Accordingly, the plastic laminated structure can be lightweight and have high strength, in particular high flexural rigidity. The strength of the aforementioned plastic laminated structure can be further improved by using fiber-reinforced plastic which includes reinforcing fibers (e.g., carbon fibers or glass fibers) for the core member or plate member. Such a fiber-reinforced plastic laminated structure can provide so flexural rigidity to withstand high load in various types of applications.

Plastic laminated structures are subjected to surface treatment for most applications before use. To achieve this, a coating method has been developed for applying a coating onto surfaces of such a plastic laminated structure (see Japanese Patent Publication No. JP 2006-328 913 A).

The coating of plastic laminated structures that are subjected to surface treatment can provide various characteristics such as good appearance of their surface or thermal insulation improvement. However, it is difficult to firmly apply a coating onto a surface of a plastic plate without peeling off. In particular, it is more difficult to keep a coating on the surfaces without peeling off for a long time.

Therefore, the present invention has been developed to solve the above disadvantages. It is an object of the present invention to provide a plastic laminated structure that can firmly hold a surface treatment layer such as coating without peeling off.

### SUMMARY OF THE INVENTION

A plastic laminated structure according to an aspect of the present invention includes a plate member 2 of plate-shaped fiber-reinforced plastic and a core member 3 of wave-shaped fiber-reinforced plastic. The plate member 2 includes a thermoplastic resin and reinforcing fibers embedded in the thermoplastic resin. The core member 3 is thermally bonded to the plate member 2, and includes a thermoplastic resin and reinforcing fibers that is embedded in the thermoplastic resin. A part of or the entire area of a main surface of the plate member includes smooth and rough surfaces 2a and 2b. First asperities are formed on the rough surface 2b on the main surface side. The smooth and rough surfaces 2a and 2b are alternately arranged in stripes.

A plastic laminated structure according to the present invention can have the following features. However, the present invention is not limited to these.

In a plastic laminated structure according to an aspect, the smooth surface has second asperities. The difference between first asperities is greater than the second asperities.

A plastic laminated structure according to the present invention includes a plate member 2 of plate-shaped fiber-reinforced plastic and a core member 3 of wave-shaped fiber-reinforced plastic. The plate member 2 includes a thermoplastic resin and reinforcing fibers embedded in the thermoplastic resin. The core member 3 is thermally bonded to the plate member 2, and includes a thermoplastic resin and reinforcing fibers that is embedded in the thermoplastic resin. A part of or the entire area of a main surface of the plate member includes smooth and rough surfaces 2a and 2b. The rough surface 2b has larger roughness than the smooth surface 2a. The smooth and rough surfaces 2a and 2b are alternately arranged in stripes.

In a plastic laminated structure according to an aspect, the rough surface 2b of the plate member 2 is formed by the reinforcing fibers which are embedded in the thermoplastic resin. In this case, the rough surface 2b can have very small asperities. The rough surface 2b which has very small asperities in this plastic laminated structure can be formed by the reinforcing fibers by moving the thermoplastic resin with which space between the fibers is filled by melting the thermoplastic resin of the fiber-reinforced plastic. According to this plastic laminated structure, because the rough surface 2b which has very small asperities can be formed by the reinforcing fibers, a surface treatment layer such as coating can be effectively fixed by its anchoring effect.

In a plastic laminated structure according to another aspect of the present invention, the rough surface 2b can be formed by exposing the reinforcing fibers which are embedded in the thermoplastic resin from the main surface of the plate member 2. In this case, the anchoring effect can be increased. According to this plastic laminated structure, in order to form the rough surface which is formed by exposing the reinforcing fibers from the surface, the thermoplastic resin which includes the reinforcing fibers is melted. The melted, flowable resin can provide the rough surface which has very small asperities. In addition, the rough surface which is formed by exposing the reinforcing fibers from the surface can more firmly hold a surface treatment layer such as coating because it has good anchoring effect. In this case, the reinforcing fibers which are exposed from the surface form very small undercut-like recesses. Such a coating material can be held in these recesses. As a result, high anchoring effect can be provided.

In a plastic laminated structure according to another aspect of the present invention, it is preferable that the wave-shaped core member 3 includes slant portions 3B and bonded portions 3A, and that the plate member 2 includes bonded parts 2x which have a surface as the smooth surface 2a, and non-bonded parts 2y which have a surface as the rough surface 2b. The slant portions 3B and bonded portions 3A are arranged alternately so that parallel grooves 3E are alternately arranged at a predetermined pitch on the both sides. The bonded parts 3A of the core member 3 are thermally bonded to the back surface of the bonded part 2x. The core member 3 is not thermally bonded to the non-bonded part 2y.

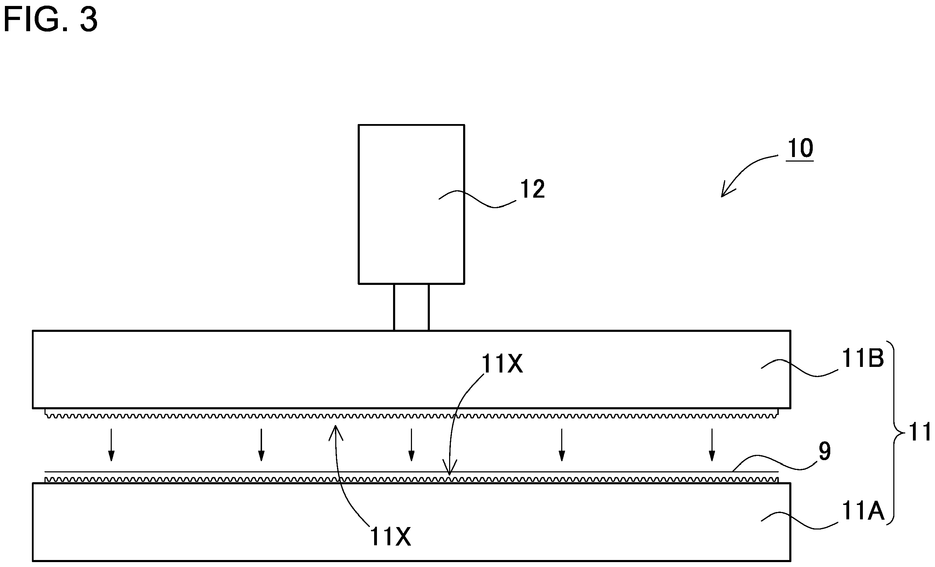

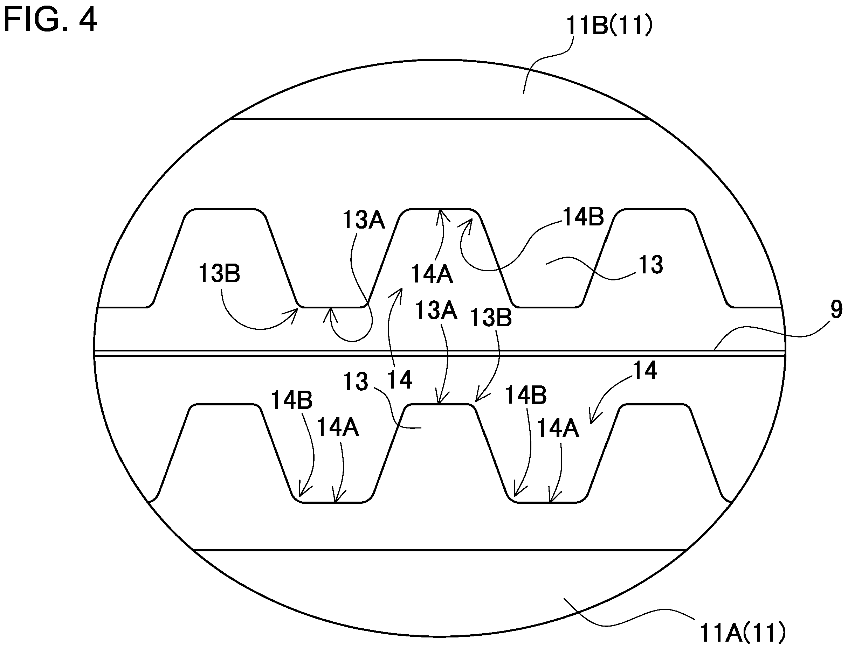

According to this plastic laminated structure, the core member and the plate member are thermally and firmly bonded to each other, while very small asperity parts can be arranged in stripes. The reason is that, according to this plastic laminated structure, the smooth surfaces and the rough surfaces can be provided by the bonded parts which are thermally bonded to the core member and the non-bonded parts which are not thermally bonded to the core member, respectively, by thermally bonding the bonded parts of the wave-shaped core member, which has the parallel grooves which are formed by alternately arranging the slant portions and bonded portions and are alternately arranged at a predetermined pitch on its both sides, to the plate member. This plastic laminated structure can be produced by pressing the bonded portions of the core member and the plate member from the both sides and thermally bonding them to each other as shown in Figs. 3 and 4. Melted thermoplastic resin of the pressed bonded portions can be thermally and firmly bonded to the plate member. Also, according to this plastic laminated structure, in the bonded part, the back surface of the plate member is thermally bonded to the core member, and the surface of the bonded part serves as the smooth surface which can provide good appearance. In addition, the core member and the plate member are thermally and firmly bonded. Also, in the non-bonded part, the back surface of the plate member is not thermally bonded to the core member, and the surface of the non- bonded part serves as the rough surface. In the bonded part, the bonded portion of the core member and the plate member are pressed from the both sides. As a result, the main surface of the plate member can serve as the smooth surface in the bonded part. On the other hand, the non-bonded part is not pressed from the back surface. Accordingly, melted thermoplastic resin will flow. As a result, asperities can be formed by the reinforcing fibers in the non-bonded part. In the bonded part, the plate member and the core member are pressed from the both sides after placed on one another. As a result, the main surface of the plate member can be the smooth surface in the bonded part. On the other hand, in the non-bonded part, the main surface of the plate member contacts the pressure face while the core member is not pressed. Accordingly, the melted thermoplastic resin will move from areas between the reinforcing fibers. As a result, the rough surface can be formed by the reinforcing fibers in the non-bonded part. Therefore, according to this plastic laminated structure, in a step for thermally bonding the core member to the plate member, the smooth surfaces and the rough surfaces can be arranged in stripes on the main surface of the plate member. That is, additional step is not required to form strip-shaped rough surfaces. In addition, because the bonded portion of the core member and plate member are pressed when thermally bonded to each other, they can be firmly fixed. In other words, according to this plastic laminated structure, in a step for thermally bonding the core member to the plate member, the smooth surfaces and the rough surfaces can be formed in stripes on the main surface of the plate member, and simultaneously the plate member and the core member can be thermally and firmly bonded to each other.

In a plastic laminated structure according to another aspect of the present invention, the trapezoidal wave shape of the core member 3 can be formed by alternately arranging slant-face portions 3B and bonding portions 3A so that parallel grooves 3E are arranged at a predetermined pitch alternately on the both sides of the core member 3.

A bonded part 2x that is formed by thermally bonding the bonding portions 3A of the core member 3 onto a back surface of the plate member 2 can serve as the rough surface 2b. A non-bonded part 2y onto which the core member 3 is not thermally bonded can serve as the smooth surface 2a.

In a plastic laminated structure according to another aspect, the trapezoidal wave shape of the core member is formed by alternately arranging slant-face portions and bonding portions so that parallel grooves are arranged at a predetermined pitch alternately on the both sides of the core member.

The bonding portions have a width within the range not smaller than 20% and not greater than 100% of the thickness of the plastic laminated structure.

In a plastic laminated structure according to another aspect, the plastic laminated structure has a thickness not smaller than 0.8 mm.

In a plastic laminated structure according to another aspect of the present invention, a surface treatment layer can be formed on the main surface of the plate member. According to this plastic laminated structure, the plastic laminated structure can have suitable surface conditions for various applications by selecting a suitable surface treatment layer depending on the applications.

In a plastic laminated structure according to another aspect of the present invention, a coating can be used as the surface treatment layer. Also, the surface treatment layer can be a coating of laminated structure that includes a primer and a finishing coating material laminated on the primer.

In a plastic laminated structure according to another aspect of the present invention, the plate members can be thermally bonded to either side of the core member. In the case in which carbon fibers are embedded as the reinforcing fibers in the plate member and the core member, the plastic laminated structure can have very high strength. Also, the thermoplastic resin of the plate member and the core member can be selected from the group consisting of nylon, polycarbonate, acrylic resin, PET, PP, PPS, HTPE, phenoxy resin, and polyvinyl chloride.

According to the aforementioned plastic laminated structure, a suitable surface treatment layer for optimal surface treatment can be firmly fixed on the surface of the plastic laminated structure without peeling off. The reason is that, according to the aforementioned plastic laminated structure, because the smooth surfaces and the rough surfaces are alternately arranged in stripes on the surface, such a surface treatment layer can be firmly fixed by the anchoring effect of the rough surfaces. According to the aforementioned plastic laminated structure, because the rough surface is not formed on the entire surface of the plastic laminated structure but the smooth surfaces and the rough surfaces are arranged in stripes, the smooth surfaces can provide a flat surface which provides good appearance while a surface treatment layer can be firmly fixed on the surface of the plastic laminated structure by the anchoring effect of the rough surfaces which are arranged in stripes. In particular, according to the plastic laminated structure of the present invention, because the smooth surfaces and the rough surfaces are alternately arranged in stripes, the smooth surfaces can provide good appearance while a surface treatment layer can be entirely and firmly fixed on the surface of the plastic laminated structure by the anchoring effect of the rough surfaces which are arranged between the smooth surfaces.

A method for producing a plastic laminated structure 1 according to another aspect is provided. The plastic laminated structure 1 includes a plate member 2 of plate-shaped fiber-reinforced plastic 9 and a core member 3 of trapezoidal-wave-shaped fiber-reinforced plastic 9. The plate member 2 includes a thermoplastic resin and reinforcing fibers embedded in the thermoplastic resin. The core member 3 is thermally bonded to the plate member 2, and is formed of a thermoplastic resin and reinforcing fibers embedded in the thermoplastic resin. The core member 3 includes slant portions 3B and bonded portions 3A that are arranged alternately whereby forming parallel grooves 3E that are alternately arranged on the both sides. The method includes a placement step, an insertion step, and a bonding step. In the placement step, the core member 3 is placed on the plate member 2. In the insertion step, press protrusions 23 are inserted into their corresponding parallel grooves 3E of the core member 3. In the bonding step, the bonded portions 3A of the core member 28 are bonded to the plate member 2 by pressing the bonded portions 3A of the core member 3 by the press protrusions 23 whereby bonding the bonded portions 3A of the core member 3 to the plate member 2.

In a method for producing a plastic laminated structure according to another aspect, the bonded portions 3A of the core member 3 can be bonded to the plate member 2 by thermally melting the thermoplastic resin of the plate member 2 and the core member 3 in the bonding step.

In a method for producing a plastic laminated structure according to still another aspect, the bonded portions 3A of the core member 3 can be bonded to the plate member 2 by an adhesive in the bonding step. A both thermosetting and thermoplastic material that is liquid or paste in its uncured state and becomes a thermoplastic material after cured can be used as the adhesive.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
Fig. 1 is a partially enlarged cross-sectional view of the plastic laminated structure according to an embodiment of the present invention;
Fig. 2 is a partially enlarged cross-sectional view of the plastic laminated structure according to another embodiment of the present invention;
Fig. 3 is a front view showing an exemplary forming press for forming a core member;
Fig. 4 is an enlarged view showing a principal part of the forming press shown in Fig. 3;
Fig. 5 is a front view showing an exemplary bonding apparatus for bonding the core member to a plate member;
Fig. 6 is an enlarged view showing a principal part of the bonding apparatus shown in Fig. 5.
Fig. 7 shows a plan view of the plastic laminated structure according to one embodiment of the present invention, and a graph showing a measurement result of the roughness of a main surface of a plate member of the plastic laminated structure;
Fig. 8 is a front view showing another exemplary bonding apparatus for bonding a core member to a plate member;
Fig. 9 is an enlarged view showing a principal part of the bonding apparatus shown in Fig. 8;
Fig. 10 is a front view showing another exemplary bonding apparatus for bonding a core member to a plate member;
Fig. 11 is an enlarged view showing a principal part of the bonding apparatus shown in Fig. 10;
Fig. 12 is a partially enlarged cross-sectional view of the plastic laminated structure according to another embodiment of the present invention;
Fig. 13 is a perspective view of the plastic laminated structure shown in Fig. 12;
Fig. 14 shows a graph of a measurement result of the roughness of the surface of a plate member of the plastic laminated structure shown in Fig. 13;
Fig. 15 shows a graph of a measurement result of the roughness of the surface of a plate member of the plastic laminated structure shown in Fig. 13;
Fig. 16 shows a graph of a measurement result of the roughness of the surface of a plate member of the plastic laminated structure shown in Fig. 13; and
Fig. 17 shows a graph of a measurement result of the roughness of the surface of a plate member of the plastic laminated structure shown in Fig. 13.

### DESCRIPTION OF EMBODIMENTS

The embodiments will now be described with reference to the accompanying drawings, wherein like reference numerals designate corresponding or identical elements throughout the various drawings.

In the following description, although terms for indicating particular directions or positions (e.g., "upper" and "lower", and other terms including these terms) will be used as necessary for ease of understanding the present with reference to the drawings, the technical scope of the present invention is not limited by these terms. Portions attached with the same reference sign in different drawings show the portions or members same as or similar to each other.

It should be appreciated, however, that the embodiments described below are illustrations of a plastic laminated structure and a method for producing the plastic laminated structure to give a concrete form to technical ideas of the invention, and a plastic laminated structure and a method for producing the plastic laminated structure of the invention are not specifically limited to description below. Unless otherwise specified, any dimensions, materials, shapes and relative arrangements of the parts described below are given as an example and not as a limitation. In addition, the description for one embodiment may be applied to other embodiments or examples. Additionally, the sizes and the arrangement relationships of the members in the drawings are occasionally exaggerated for ease of explanation.

The plastic laminated structure according to the present invention includes a plate member and a core member. The plate and core members are formed of plate-shaped fiber-reinforced plastic which includes reinforcing fibers in thermoplastic resin. The core member has a trapezoidal wave shape. The plate member is thermally bonded to one side or the both sides of the core member. In the plastic laminated structure, a main surface of the plate member includes smooth and rough surfaces. First and second asperities are formed on the rough and smooth surfaces, respectively, on the main surface side. The difference between first asperities is greater than the second asperities. The difference between asperities can be defined by the standard deviation between asperities. It is noted that the smooth surface refers to a surface that has a standard deviation of asperities on its surface smaller than the rough surface from a microscopic viewpoint, and is not necessarily completely flat.

Smooth and rough surfaces are formed on the main surface of the plate member of the plastic laminated structure. The roughness of the rough surface is greater than the smooth surface. The smooth and rough surfaces are alternately arranged in stripes. Neither the smooth surface nor the rough surface extends the entire surface of the plate member. The rough surfaces are arranged in stripes on the main surface of the plate member. A coating which is applied to the main surface of the plate member can be fixed and prevented from peeling off by the anchoring effect of the stripe-shaped rough surfaces.

The following description will describe plastic laminated structures according to preferred embodiments of the present invention with reference to the drawings.

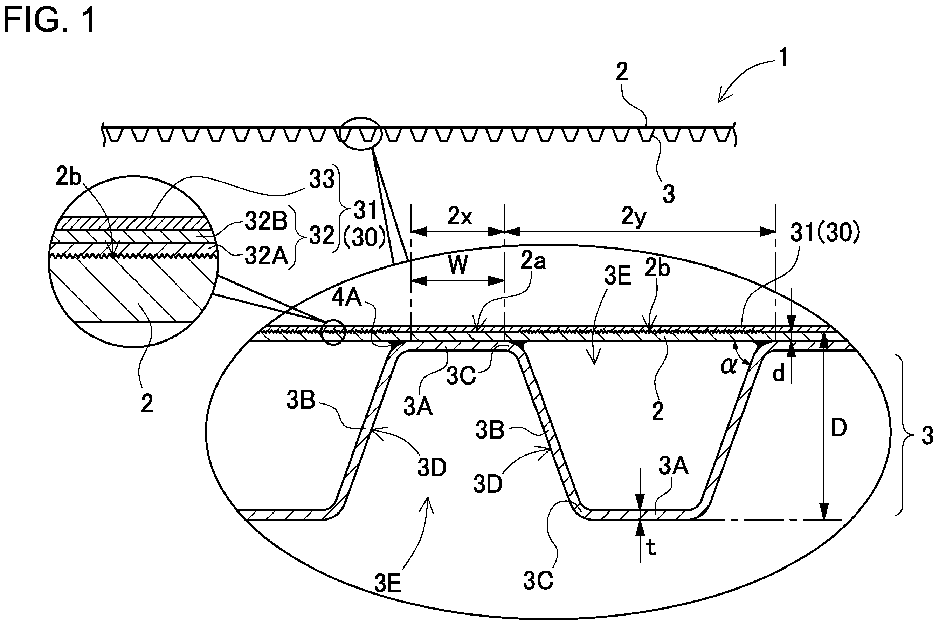

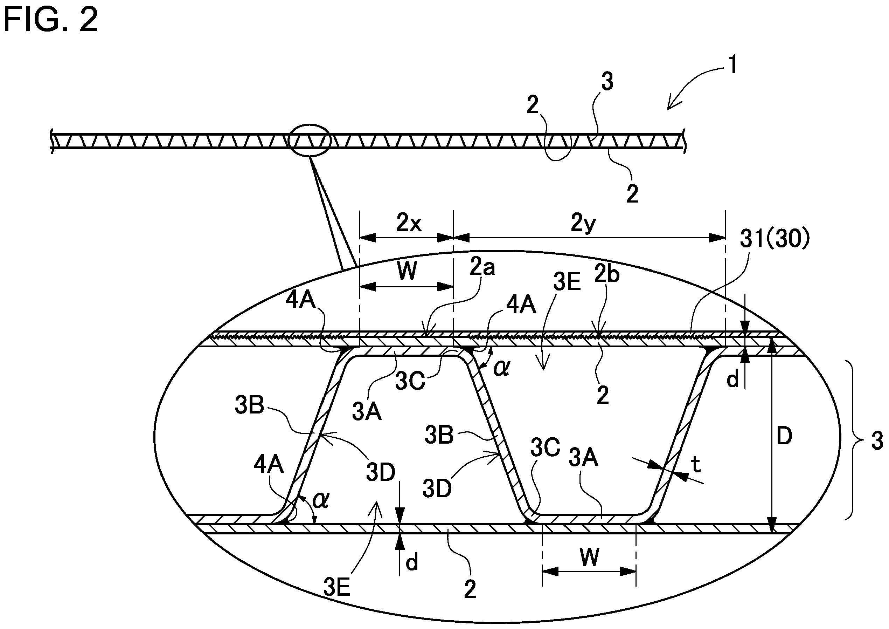

A plastic laminated structure 1 shown in Fig. 1 includes a flat plate member 2 and a trapezoidal-wave-shaped core member 3 which is thermally bonded and fixed to the plate member 2. The plate and core members 2 and 3 are formed of fiber-reinforced plastic which includes a thermoplastic resin and reinforcing fibers embedded in the thermoplastic resin. As shown in Fig. 1, the plate member 2 is thermally bonded to one side of the core member 3. For this reason, this plastic laminated structure 1 can be easily bent. Therefore, this structure is suitable for applications in which it is bent in use. However, the plastic laminated structure may have two plate members 2 which are thermally bonded to the both sides of the core member 3 as shown in Fig. 2. This structure can have high flexural rigidity.

The plastic laminated structure 1 can be suitably used in applications which require light weight and high flexural rigidity. For example, the entire thickness (D) of the plastic laminated structure 1 can be not smaller than 0.8 mm, preferably not smaller than 1.5 mm, and more preferably not smaller than 2 mm depending on its application. The strength of the plastic laminated structure 1 can be high when it is thick. However, if too thick, the plastic laminated structure becomes too heavy. From this viewpoint, the entire thickness of the plastic laminated structure 1 can be not greater than 10 cm, preferably not greater than 3 cm, for example, and more preferably not greater than 1 cm in applications which requires light weight as important factor.

The thickness (d, t) of the plate member 2 and the core member 3 can be not smaller than 0.15 mm, preferably not smaller than 0.2 mm in terms of their strength, for example. The plate member 2 and the core member 3 become heavy if they are too thick. For this reason, the thickness of the plate member 2 and the core member 3 can be not greater than 1 mm, preferably not greater than 0.8 mm, more preferably not greater than 0.5 mm in terms of weight reduction, for example. The thickness of the plate member 2 can be same as the core member 3 in consideration of the strength and entire thickness (D) of the plastic laminated structure. Also, the plate member can be thicker than the core member. In this case, the surface strength can be high. Alternatively, the core member can be thicker than the plate member. In this case, the flexural rigidity can be high.

The plastic laminated structure according to the present invention can be suitably used for body sheet steel of vehicles, a case of electronic devices such as mobile phones and tablets instead of metal plates such as aluminum plate and magnesium plate. For example, the plastic laminated structure can be thin (lightweight) but have high flexural rigidity. For example, in the case in which the entire thickness (D) of the plastic laminated structure is 3 mm, and the thickness (d, t) of the plate member 2 and the core member 3 is 0.15 mm, this plastic laminated structure can have flexural rigidity seven times higher than and one-ninth of the weight of a high tensile steel with thickness of 0.65 mm. In various applications including vehicle body sheet steel application, weight and flexural rigidity are very important characteristics. The reason is that such applications require thin, lightweight and high flexural rigidity characteristics.

The trapezoidal-wave-shaped core member 3 of the plastic laminated structure 1 is thermally bonded to the back surface of the plate member 2. The trapezoidal wave shape of the core member 3 is formed by alternately arranging slant portions 3B and bonded portions 3A so that parallel grooves 3E are arranged at a predetermined pitch alternately on the both sides of the core member 3. The top of the trapezoidal wave serves as the bonded portion 3A. The bonded portion 3A is thermally bonded to the back surface of the plate member 2. The slant portion 3B of the illustrated core member 3 has flat inclined surfaces 3D. The both sides of the inclined surface 3D are exposed. This arrangement can provide good flexural rigidity.

The reinforcing fibers are embedded in plastic of the plate member 2 and the core member 3 of formed of fiber-reinforced plastic. A thermoplastic resin is included as the plastic of the plate member 2 and the core member 3 formed of fiber-reinforced plastic at least after they are thermally bonded to each other. For example, the thermoplastic resin of the fiber-reinforced plastic can be a thermoplastic resin such as nylon, polycarbonate, or polyvinyl chloride. Alternatively, a both thermosetting and thermoplastic material which has thermosetting physical properties in its uncured state and thermoplastic physical properties after cured by heating (e.g., phenoxy resin). The both thermosetting and thermoplastic material which has thermosetting physical properties in the uncured state is liquid or paste in the uncured state but can have thermoplastic physical properties after cured. However, the thermoplastic resin of the fiber-reinforced plastic according to the present invention is not limited to nylon, polycarbonate, and both thermosetting and thermoplastic material such as phenoxy resin. Other thermoplastic resins such as acrylic resin, PET, PP, PPS, and HTPE may be used instead of nylon, polycarbonate, or polyvinyl chloride.

Carbon fibers are preferably used as the reinforcing fibers. Fiber-reinforced plastics that include carbon fibers as reinforcing fibers have high strength. For this reason, such carbon fiber-reinforced plastics can be suitably used in particular for plastic laminated structures which are required to have high strength. However, fibers which can reinforce fiber-reinforced plastic such as glass fibers, aromatic polyamide group resin, PBO fibers, ultra high strength polyethylene fibers, and high strength polyarylate fibers may be embedded as the reinforcing fibers in the thermoplastic resin instead of carbon fibers.

The reinforcing fibers can be braided into a mesh shape as a fiber sheet. Also, the fiber-reinforced plastic can be constructed of a plurality of laminated layers as fiber sheets each of which includes the reinforcing fibers parallel to each other. The reinforcing fibers can be three-dimensionally integrally arranged at random orientations in a fiber sheet. The fiber-reinforced plastic can include the fiber sheet or sheets which are embedded in the thermoplastic resin. The fiber sheet consisting of reinforcing fibers which can be three-dimensionally integrally arranged at random orientations can be produced by wet papermaking methods, alternatively, can be produced by integrally arranging reinforcing fibers in a predetermined thickness in a dry manner as a nonwoven fabric. A sheet-shaped or plate-shaped fiber-reinforced plastic can be used for the plate member 2 and the core member 3. Alternatively, prepreg which includes a plastic and a fiber sheet impregnated with the plastic can be used for the plate member 2 and the core member 3. In the case of prepreg of thermoplastic resin, the plastic laminated structure 1 is produced by curing the plastic in a process for thermally bonding the core member 3 to the plate member 2.

In a wet paper making method, paper making slurry which includes suspension of reinforcing fibers in water is prepared. The suspension of reinforcing fibers is transformed into a reinforcing fiber sheet in a wet paper making manner. In this method, a fiber sheet can be transformed from paper making slurry which includes suspension of two or more types of reinforcing fibers and additive (e.g., inorganic powder). Also, a fiber sheet can be transformed from paper making slurry which includes suspension of powdered or very small granular thermoplastic resin or a both thermosetting and thermoplastic material in the uncured state in addition to the reinforcing fibers in water. After that, the fiber-reinforced plastic can be produced by pressing this fiber sheet in a dried and heated state. This method can provide a fiber-reinforced plastic which includes a fiber sheet including uniformly distributed fibers, and has good flexural rigidity. In the case in which various types of additives are added and uniformly distributed, fiber-reinforced plastic can be mass-produced by this method. In addition, this method can produce fiber-reinforced plastic by uniformly distributing various types of reinforcing fibers which have different material, length, thickness, and the like. For this reason, inexpensive recycled materials can be used for the reinforcing fibers. Simultaneously, fiber-reinforced plastic having good physical properties can be mass-produced. However, the present invention is not limited to a particular method for producing fiber-reinforced plastic.

The bonded portions 3A of the plastic laminated structure 1 shown in Fig. 1, which are arranged on the top of the trapezoidal-wave-shaped core member 3, are thermally bonded to the back surface of the plate member 2 as shown in the partially enlarged cross-sectional view in Fig. 1. The trapezoidal wave of the core member 3 is formed by alternately arranging the slant portions 3B and the bonded portions 3A. The slant portion 3B has the flat inclined surfaces 3D.

In the illustrated plastic laminated structure 1, the inclination angle (α) between the slant portion 3B and the plate member 2 is approximately 70°, the width (W) of the bonded portion 3A is approximately 50% of the entire thickness (D) of the plastic laminated structure. However, the inclination angle (α) of the slant portion 3B of the core member 3 can be dimensioned not smaller than 30° and smaller than 90°, preferably not smaller than 45° and not greater than 80°. Also, the width (W) of the bonded portion 3A can be dimensioned not smaller than 20% and not greater than 100%, preferably not smaller than 30% and not greater than 70%, and more preferably not smaller than 35% and not greater than 60% of the thickness (D) of the plastic-laminated-structure 1.

Smooth and rough surfaces 2a and 2b are arranged on the main surface of the plate member 2 of the plastic laminated structure 1. The rough surface 2b has larger roughness than the smooth surface 2a. The smooth surfaces 2a and the rough surfaces 2b are alternately arranged in stripes. A surface treatment layer 30 such as coating 31 can be firmly fixed on the main surface of the plate member 2 by the rough surface 2b when adhering to the main surface of the plate member 2. In the plastic laminated structure 1, the smooth surface 2a and the rough surface 2b are preferably arranged in stripes on the whole surface of the plate member. This arrangement can prevent the surface treatment layer from peeling off as a whole. However, the rough surfaces 2b are necessarily arranged on the entire surface of the plate member of the plastic laminated structure 1 in stripes. The smooth surfaces 2a and the rough surface 2b may be arranged in stripes on a limited area of the plate member where the surface treatment layer is likely to peel off.

The rough surfaces 2b are preferably formed by the reinforcing fibers which are embedded in the thermoplastic resin of the fiber-reinforced plastic as a component of the plate member 2 of the plastic laminated structure 1. In this plastic laminated structure 1, the rough surfaces 2b are formed by partially protruding the reinforcing fibers, which are embedded in the thermoplastic resin of the plate member 2, from the main surface of the plate member. Specifically, in this plastic laminated structure 1, the embedded reinforcing fibers are exposed from the surface by heating the plate member 2 and melting the thermoplastic resin of the fiber-reinforced plastic of the plate member 2. The melted thermoplastic resin moves from the reinforcing fibers on the main surface side so that the reinforcing fibers can be partially exposed. The rough surface 2b has very small asperities which are formed by the thin reinforcing fibers. In addition, the reinforcing fibers form very small undercut-like recesses on the rough surface 2b. As a result, the surface treatment layer 30 can be more firmly fixed by the anchoring effect of the rough surface.

In the case in which the reinforcing fibers of the plate member 2 are three-dimensionally arranged at random orientations, random asperities can be formed by exposing the reinforcing fibers, which are three-dimensionally arranged at random orientations, from the main surface of the plate member by melting the thermoplastic resin. In particular, in this fiber-reinforced plastic, because the reinforcing fibers are three-dimensionally integrally arranged at random orientations, the intersection between the fibers will protrude higher. As a result, this rough surface 2b can provide a higher anchoring effect. In the case in which the reinforcing fibers of the fiber-reinforced plastic of the plate member 2 are arranged parallel to each other, the thermoplastic resin between the reinforcing fibers will move toward the back surface side so that space is created between reinforcing fibers when the thermoplastic resin is melted. As a result, the rough surface 2b is formed.

The core member 3 and the plate member 2 of the plastic laminated structure 1 can be thermally bonded to each other by pressing the bonded portions 3A of the core member 3 and the plate member 2 which are placed on one another when the thermoplastic resin is brought in its melted state by heating the plate member 2 and the core member 3. The main surface of the plate member of the plastic laminated structure 1 includes bonded parts 2x and non-bonded parts 2y. The bonded part 2x serves as the smooth surface 2a, and is thermally bonded to the bonded portion 3A of the core member 3. The non-bonded part 2y serves as the rough surface 2b, and is not thermally bonded to the bonded portion 3A of the core member 3. The reason is that the core member 3 and the plate member 2 in the bonded part 2x are pressed from the both sides, but the core member 3 in the non-bonded part 2y is not pressed by the plate member 2 in the process for thermally bonding the core member 3 to the plate member 2. In the bonded part 2x, the plate member 2 and the core member 3 are pressed from the both sides after placed on one another. As a result, the main surface of the plate member 2 can be the smooth surface 2a. On the other hand, in the non-bonded part 2y, the main surface of the plate member contacts the pressure face but the core member 3 is not pressed. Accordingly, the melted thermoplastic resin will move from areas between the reinforcing fibers. As a result, the rough surface 2b can be formed by the reinforcing fibers. In particular, the reinforcing fibers can provide the rough surface 2b with very small asperities. In this plastic laminated structure 1, the smooth and rough surfaces 2a and 2b are formed on the bonded and non-bonded parts 2x and 2y of the plate member 2, respectively, by thermally bonding the bonded portions 3A of the trapezoidal wave-shaped core member 3 to the plate member 2. As a result, the stripe-shaped smooth and rough surfaces 2a and 2b are alternately formed on the surface of the plate member.

In the plastic laminated structure 1, after the plate member 2 and the core member 3 are heated to a temperature in which their thermoplastic resin becomes its melted state, the plate member 2 and the core member 3 which include melted thermoplastic resin are placed on one another, and contact areas between the plate member 2 and the bonded portions 3A of the core member 3. As a result, the core member 3 and the plate member 2 can be thermally bonded to each other. In this method, in the process for thermally bonding the plate member 2 to the core member 3, after the plate member 2 and the core member 3 in which their thermoplastic resin is heated to its melted state are placed on one another, the bonded portions 3A of the core member 3 are pressed against the plate member 2 so that the core member 3 is thermally bonded to the plate member 2.

The fiber-reinforced plastic of the core member 3 is formed into a trapezoidal wave shape by a forming press 10 shown in Fig. 3. The illustrated forming press 10 includes a pair of forming dies 11, and a cylinder 12 of an actuator for moving one of the forming dies 11 upward and downward. A fiber-reinforced plastic material plate 9 is interposed between the pair of forming dies 11. The forming dies 11 include forming surfaces 11X which are opposed to each other and have trapezoidal wave shapes meshing each other. The fiber-reinforced plastic material plate 9 can be formed into a trapezoidal wave shape by the dies. The fiber-reinforced plastic material plate 9 is sandwiched and pressed by the forming dies 11, and is then heated and formed into the trapezoidal wave shape. After pressed in its heated state and formed into the trapezoidal wave shape, the fiber-reinforced plastic material plate 9 of thermoplastic resin is cooled so that the thermoplastic resin is cured. Subsequently, the fiber-reinforced plastic material plate is removed from the forming dies 11. In a both thermosetting and thermoplastic material, the material in its thermosetting resin state is heated and turns into its thermoplastic resin state. For this reason, in the case of a both thermosetting and thermoplastic material, the material is pressed in its heated state and formed into the trapezoidal wave shape so that the material in its thermosetting resin state is cured. In the case of a both thermosetting and thermoplastic material, because the material in its thermosetting resin state is cured by heat, the material can be removed from the forming dies even if not cooled.

The opposed forming surfaces 11X of the forming dies 11 have trapezoidal wave shapes which can mesh each other whereby sandwiching the fiber-reinforced plastic material plate 9. The fiber-reinforced plastic material plate 9 of the core member 3 in its heated state is sandwiched between the forming surfaces 11X, and formed into the trapezoidal wave shape. As shown in Fig. 4, parallel ridges 13 are arranged at a predetermined pitch on the forming surface 11X, and grooves 14 are formed between the ridges 13 adjacent to each other. In other words, the forming die 11 has elongated trapezoidal prisms on the forming surface 11X. The ridges 13 that are arranged on the forming surface 11X of one of the forming dies 11 are shaped to mesh the grooves 14 that are arranged on the forming surface 11X of another forming die 11. When the fiber-reinforced plastic material plate 9 is sandwiched from its both sides between the forming surfaces 11X, the fiber-reinforced plastic material plate 9 can be formed into the trapezoidal wave shape by engaging the ridges 13 and the grooves 14. In the illustrated forming dies 11, a rounded part 13B is formed on the both edges of the top end surface 13A of the ridge 13, and a curved part 14B is formed on the both edges of the bottom surface 14A of the groove 14. The rounded part 13B and the curved part 14B are curved surfaces. When the fiber-reinforced plastic material plate 9 in its heated state is sandwiched from its both sides between the forming surfaces 11X, curved portions 3C are formed in the boundary between the slant portion 3B and the bonded portion 3A of the core member 3.

In order to heat and press the fiber-reinforced plastic material plate 9 and to cool it, circulation paths for heating and for cooling (not shown) are formed in the forming dies 11. A fluid (e.g., heating oil) circulates through the heating circulation path, and heats the forming surface 11X. Also, a fluid (e.g., cooling water) circulates through the cooling circulation path, and cools the forming surface 11X. The heating circulation path is connected to a heating system which circulatively provides a liquid (e.g., hot water or heating oil) or gas (e.g., steam). The cooling circulation path is connected to a cooling system which circulatively provides a liquid such as cooling water or a refrigerant which can provide a cooling effect by heat of vaporization when evaporated. The heating system heats the fluid so that the heated fluid circulates through the circulation path of the forming die 11. The cooling system cools the fluid so that the cooled fluid circulates through another circulation path of the forming die 11.

The aforementioned forming press 10 forms the fiber-reinforced plastic material plate 9 into the trapezoidal wave shape as follows.
1. The cylinder 12 raises the upper forming die 11B while keeping its forming surface 11X in the horizontal orientation so that the forming dies 11 are opened. The fiber-reinforced plastic material sheet 9 is then placed on the forming surface 11X that is the upper surface of the lower forming die 11A.
2. A heating fluid (e.g., heating oil or steam) circulates through the circulation paths of both the forming dies 11 so that the forming surfaces 11X of the forming die 11 are brought in its heated state.
3. The cylinder 12 lowers the upper forming die 11B so that the fiber-reinforced plastic material sheet 9 in its heated state is pressed by the forming surfaces 11X of the forming dies 11, and formed into the trapezoidal wave shape.
4. Circulation of the heating fluid through the circulation paths of both the forming dies 11 is stopped, and cooling fluid circulates through other circulation paths so that the forming surfaces 11X are cooled.
5. After the fiber-reinforced plastic 9 which is formed in the trapezoidal wave shape is cooled, the cylinder 12 raises the upper forming die 11B. The trapezoidal-wave-shaped fiber-reinforced plastic material sheet 9 is removed as the core member 3 from the forming dies 11.

In the case in which thermoplastic resin is used for the core member 3 of the fiber-reinforced plastic, the core member 3 is cooled a temperature in which its thermoplastic resin is cured, and is then removed from the forming dies 11. In the case in which a both thermosetting and thermoplastic material is used for the core member 3, the core member 3 can be removed from the forming dies 11 when the material in its thermosetting resin state is cured and becoming thermoplastic resin.

It should be noted that an apparatus of producing the core member and a method of producing the core member are not limited to the above mentioned apparatus or method, rather other apparatus or method which is capable of forming the trapezoidal-wave-shaped core member are also available. For example, other apparatus of producing the core member forms the core member to trapezoidal-wave-shape as a whole by forming single trapezoidal-wave-shape on the fiber reinforced plastic step by step.

In this plastic laminated structure 1, after the bonded portions 3A of the core member 3 contact the plate member 2, the contact areas are pressed from the both sides and heated. Accordingly, the thermoplastic resin of the bonded portions 3A of the core member 3 and the plate member 2 is melted, simultaneously the bonded portions 3A of the core member 3 and the plate member 2 is are pressed. As a result, the core member 3 is thermally bonded to the plate member 2. According to this method, the plate member 2 is thermally bonded to the core member 3 by placing the trapezoidal-wave-shaped core member 3 on the plate member 2 and sandwiching the contact areas between the core member 3 and the plate member 2 by the pair of heated hot plates, and then heating and pressing the contact areas by the hot plates.

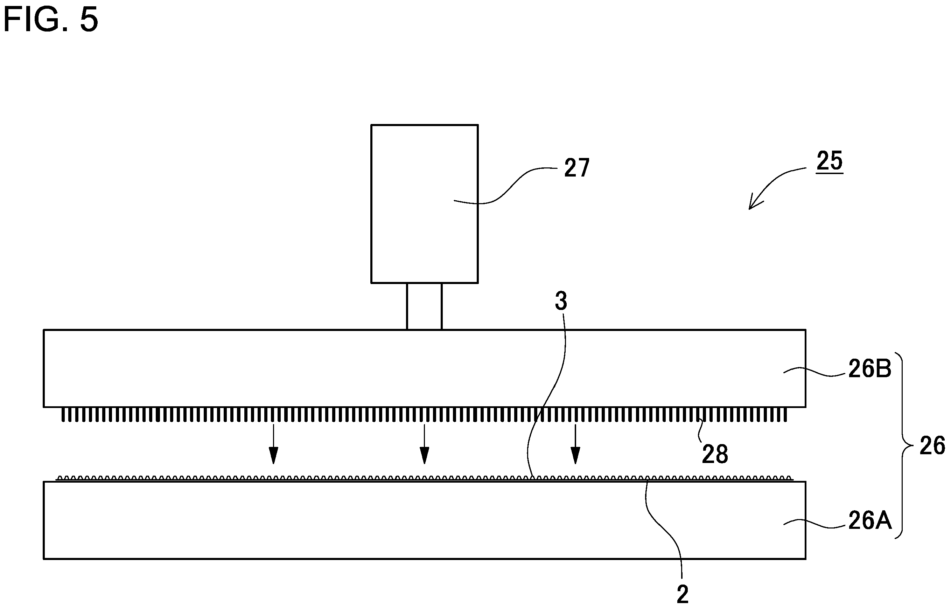

The plate member 2 of the plastic laminated structure 1 shown in Fig. 1 is thermally bonded to the core member 3 by a bonding apparatus 25 shown in Figs. 5 and. 6. The bonding apparatus 25 includes a pair of hot plates 26, and a cylinder 27 of an actuator for moving one of the hot plates 26 upward and downward. The core member 3 is placed on the plate member 2. The lower and upper hot plates 26A and 26B of the illustrated bonding apparatus 25 press the bonded portions 3A of the core member 3 against the plate member 2 in their heated state whereby thermally bonding them to each other. The lower hot plate 26A has a flat surface. The upper hot plate 26B includes press protrusions 28 which are spaced at the pitch corresponding to the trapezoidal wave shape of the core member 3 away from each other. The press protrusions 28 can heat and press only the bonded portions 3A of the core member 3. The plate member 2 is placed on the upper surface of the lower hot plate 26A. The plate member 2 is heated by the lower hot plate 26A. The core member 3 is placed on the plate member 2. The bonded portions 3A of the core member 3 are heated and pressed by the press protrusions 28 of the upper hot plate 26B. As a result, the hot plate 26 thermally bonds the plate member 2 to the core member 3. In the bonded part 2x in which the bonded portions 3A of the core member 3 are thermally bonded to the plate member 2 by heating and pressing the press protrusions 28 of the upper hot plate 26B, the main surface of the plate member 2 which is heated and melted by the lower hot plate 26A is formed into the smooth surfaces 2a by the lower hot plate 26A which has a flat shape. In the non-bonded part 2y in which the core member 3 is not thermally bonded to the plate member 2, the main surface of the plate member 2 is not pressed by the lower hot plate 26A and is formed into the rough surfaces 2b by the reinforcing fibers. According to the method for bonding the core member 3 to the plate member 2 using by the hot plates 26, the plate member can be provided with a smooth surface which has good appearance simply by bonding the plate member 2 to the core member 3. Alternatively, the rough surface 2b of the plastic laminated structure 1 can be formed by heating and pressing the main surface of the plate member by a hot plate which has asperities on its surface.

After bonding the plate member 2 and the core member 3 by heating and pressing them, the lower hot plate 26A and the upper hot plate 26B cool the plate member 2 and the core member 3. Subsequently, the lower hot plate 26A and the upper hot plate 26B remove the pressure. As a result, the plastic laminated structure 1 can be taken out from the hot plates 26. The upper and lower hot plates 26 are heated by heating a refrigerant (e.g., heating oil) which circulates through them, and are then cooled by cooling a fluid which circulates through them. In order to cool the plate member 2 and the core member 3 after thermally bonding the plate member 2 and the core member 3 by heating and pressing them, heating and cooling circulation paths (not shown) are formed in the hot plates 26 similar to the forming dies 11. The heating fluid (e.g., heating oil) which circulates through the heating circulation path heats the surface of the lower hot plate 26A and the press protrusions 28 of the upper hot plate 26B. The cooling fluid (e.g., cooling water) which circulates through the cooling circulation path cools the surface of the lower hot plate 26A and the press protrusions 28 of the upper hot plate 26B. The heating circulation path is connected to a heating system which circulatively provides liquid (e.g., hot water or heating oil) or gas (e.g., pressurized steam). The cooling circulation path is connected to a cooling system which circulatively provides liquid such as cooling water and a refrigerant which can provide a cooling effect by heat of vaporization when evaporated. The heating system heats the fluid so that the heated fluid circulates through the circulation path of the hot plate 26. The cooling system cools the fluid so that the cooled fluid circulates through another circulation path of the hot plate 26.

The aforementioned bonding apparatus 25 bonds the plate member 2 to the core member 3 as follows.
1. The cylinder 22 raises the upper hot plate 26B while keeping the upper and lower hot plates 26 in the horizontal orientation so that the hot plates 26 are opened. Subsequently, the plate member 2 is placed on the lower hot plate 26A, and the core member 3 is then placed on the plate member 2. The core member 3 is positioned so that the press protrusions 28 of the upper hot plate 26B are guided into their corresponding parallel groove 3E.
2. Heating fluid (e.g., heating oil or steam) circulates through the circulation paths of both the hot plates 26 so that the surface of the lower hot plate 26A and the press protrusions 28 of the upper hot plate 26B are brought in their heated state.
3. The cylinder 27 lowers the upper hot plate 26B so that the core member 3 and the plate member 2 are heated and pressed by the upper and lower hot plates 26. Accordingly, the plastic laminated structure 1 is produced by thermally bonding the bonded portions 3A of the core member 3 to the plate member 2.
4. Circulation of the heating fluid through the circulation paths of both the hot plates 26 is stopped, and cooling fluid circulates through the circulation paths so that the surface of the lower hot plate 26A and the press protrusions 28 of the upper hot plate 26B are cooled.
5. After the heated areas of the plastic laminated structure 1, which is constructed of the core member 3 and the plate member 2 thermally bonded to each other, are cooled, the cylinder 27 raises the upper hot plate 26B so that the plastic laminated structure 1 is taken out from the hot plates 26.

The removal of the plastic laminated structure 1 from the hot plates 26 is performed after the thermoplastic resin of the fiber-reinforced plastic is cured. In the case in which the core member 3 and the plate member 2 are thermally bonded to each other by the fiber-reinforced plastic of a both thermosetting and thermoplastic material or a both thermosetting and thermoplastic material, the plastic laminated structure 1 can be removed from the hot plates after the both thermosetting and thermoplastic material in its thermoplastic resin state turns into its thermoplastic resin state, and the core member 3 and the plate member 2 are cooled.

In the case of the fiber-reinforced plastic of thermoplastic resin, after the thermoplastic resin is heated and melted, the plate member 2 and the core member 3 are pressed from the both sides and thermally bonded to each other. The plate member 2 and the core member 3 of fiber-reinforced plastic can be thermally bonded to each other without adhesives. However, the plastic laminated structure 1 can be produced by thermally bonding them through an adhesive. For example, the plate member 2 and the core member 3 may be thermally bonded through an adhesive which can be melted by heat.

In the case in which the plastic laminated structure 1 is produced by thermally bonding the plate member 2 and the core member 3 by an adhesive to each other, thermoplastic resins which can be melted by heat such as hot-melt adhesive can be used as the adhesive. Such a hot-melt adhesive, for example, a hot-melt adhesive which has a sheet shape in its non-melted state can be prepared, and be placed on the back surface of the plate member 2 when used. In the case in which such a sheet-shaped hot-melt adhesive is placed on the back surface of the plate member 2, the thermoplastic resin of the hot-melt adhesive can be melted by heating the plate member 2. As a result, the plate member 2 and the core member 3 can be bonded to each other by pressing them from the both sides. At this time, the thermoplastic resin of the plate member 2 can be also melted when heated together with the hot-melt adhesive. Accordingly, the smooth surface 2a is formed in the bonded part 2x in which the melted thermoplastic resin is thermally bonded to the plate member 2 and the core member 3 by pressing them from the both sides. The rough surface 2b is formed in the non-bonded part 2y in which the plate member 2 and the core member 3 are not pressed from the both sides.

Prepreg of both thermosetting and thermoplastic material can also be used for the fiber-reinforced plastic. Such prepreg of both thermosetting and thermoplastic material includes a fiber sheet impregnated with the both thermosetting and thermoplastic material in its uncured state. The both thermosetting and thermoplastic material has both thermosetting resin physical properties and thermoplastic resin physical properties. The both thermosetting and thermoplastic material can be a phenoxy resin which is liquid or paste in its uncured state and exhibits thermosetting resin physical properties but can have thermoplastic physical properties after cured. "NS-TEPreg (registered trademark)" manufactured by NIPPON STEEL & SUMIKIN MATERIALS CO., LTD. can be used as such prepreg of both thermosetting and thermoplastic material.

Prepreg of both thermosetting and thermoplastic material is used for the plate member 2 or the core member 3. The plate member 2 and the core member 3 are bonded to each other by curing the both thermosetting and thermoplastic material. In the case in which prepreg of both thermosetting and thermoplastic material is used, after the plate member 2 and the core member 3 are placed on one another, the both thermosetting and thermoplastic material is cured by heat. The cured both thermosetting and thermoplastic material becomes thermoplastic resin. When the plate member 2 and the bonded portions 3A of the core member 3 are pressed from the both sides, the plate member 2 and the core member 3 are thermally bonded to each other by the both thermosetting and thermoplastic material as thermoplastic resin. Prepreg of both thermosetting and thermoplastic material can be used for one of or both the plate member 2 and the core member 3. In the case in which prepreg of both thermosetting and thermoplastic material is used for the plate member 2 of the plastic laminated structure 1, because the prepreg of both thermosetting and thermoplastic material is cured when heated and pressed in the thermally bonding process, the main surface of the plate member in the bonded part 2x can be the smooth surface 2a which provides good appearance, while the rough surface 2b is formed on the main surface of the plate member in the non-bonded part 2y in which pressure is not applied. In the case in which prepreg of both thermosetting and thermoplastic material is used for the core member 3, after formed in the trapezoidal wave shape, the prepreg of both thermosetting and thermoplastic material is placed on and thermally bonded to the plate member 2. In the case in which prepreg of both thermosetting and thermoplastic material is used for both the plate member 2 and the core member 3, bonding strength between the plate member 2 and the core member 3 of the plastic laminated structure 1 can be high.

The shape of the aforementioned prepreg of both thermosetting and thermoplastic material can be kept even in the uncured state of a both thermosetting and thermoplastic material by controlling the uncured state. In the case in which prepreg of both thermosetting and thermoplastic material is used for the core member, the prepreg is formed into the trapezoidal wave shape with the shape of the prepreg being kept in a sheet shape by controlling its uncured state. After that, the trapezoidal-wave-shaped core member is placed on and thermally bonded to the plate member 2. More specifically, the prepreg is sandwiched between a pair of hot-forming rollers, and is formed into the trapezoidal wave shape. The hot-forming rollers for forming the prepreg completely cure the both thermosetting and thermoplastic material by heating and pressing it. Alternatively, the hot-forming rollers for forming the prepreg do not completely cure the both thermosetting and thermoplastic material but cure it to a state in which the trapezoidal wave shape of the prepreg can be kept when placed on the plate member 2.

The plastic laminated structure 1 is often formed into three dimensional shapes in many applications. In the case in which a thermoplastic resin is used as plastic which includes reinforcing fibers of the fiber-reinforced plastic of the plate member 2 and the core member 3 of the plastic laminated structure 1, and the plate member 2 and the core member 3 are bonded by a thermoplastic resin to each other, after the plastic laminated structure 1 is mass-produced in a plate shape, the mass-produced plastic laminated structure 1 can be formed into a desired three dimensional shape by heating and pressing depending on its application. In order to shape the plate-shaped plastic laminated structure 1 into a certain three dimensional shape, the plate member 2 and the core member 3 are thermally bonded by a thermoplastic resin to each other.

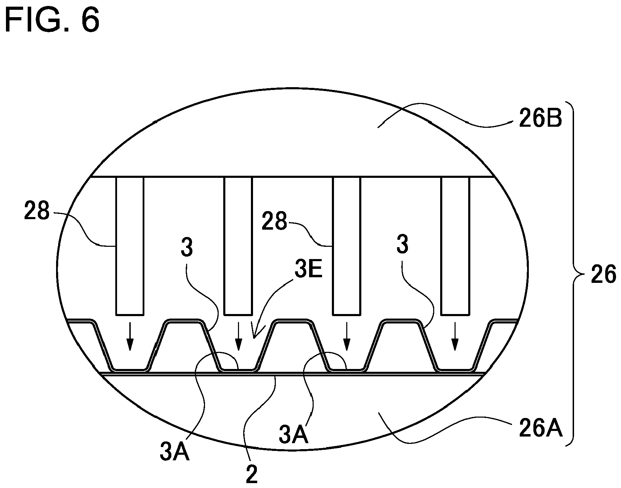

In a process for thermally bonding the bonded portions 3A of the core member 3 to the plate member 2 by pressing them against one another shown in Fig. 6, a melted thermoplastic resin or a both thermosetting and thermoplastic material in its liquid to paste state is extruded to a gap between the curved portion 3C and the plate member 2 when pressed by the bonded portion 3A and the plate member 2, and serves as a gap-filling adhesive part 4A. The curved portion 3C is arranged in the rounded part between the slant portion 3B and the bonded portion 3A in the illustrated plastic laminated structure 1. The gap between the curved portion 3C and the plate member 2 is filled with the gap-filling adhesive part 4A. The plate member 2 is thermally bonded to the core member 3 by heating and curing the extruded gap-filling adhesive 4A. The extrusion amount from the bonded portion 3A to the curved portion 3C of the gap-filling adhesive 4A which is extruded to the gap between curved portion 3C and the plate member 2 can be adjusted by the press force which is applied to the bonded portion 3A of the core member 3 and the plate member 2.

The surface treatment layer 30 is applied onto the main surface of the plate member 2 of the plastic laminated structure 1 shown in Fig. 1. A suitable material can be selected and applied as the surface treatment layer 30 to the main surface of the plate member of the plastic laminated structure 1 depending various applications. The coating 31 as the surface treatment layer 30 can be applied onto the main surface of the plate member. However, the surface treatment layer 30 is not limited to coatings. Any other functional layers which can be applied onto and cover the main surface of the plate member or decorate the main surface of the plate member can be used as the surface treatment layer 30. For example, an exterior sheet, a sheet material which can serve as exterior film, or metal foil can be fixed as the surface treatment layer 30 by an adhesive or adhesive layer on the main surface of the plate member. Also in this case, such an adhesive or adhesion layer can be firmly fixed on the main surface of the plate member by the anchoring effect of the rough surfaces 2b so that the surface treatment layer can be prevented from peeling off.

The coating 31 in the aforementioned plastic laminated structure 1 can be fixed as the surface treatment layer 30 by coating the main surface of the plate member with coating materials as follows.

A primer 32 is applied onto the main surface of the plate member of the plastic laminated structure 1 in a primer-coating process. The coating can be firmly fixed on the main surface of the plate member by the primer 32 so that the main surface of the plate member 2 can be smooth. In addition, the primer 32 applies a base color to the main surface of the plate member 2. The primer-coating process includes first and second primer-coating processes. In the first primer-coating process, a sealer 32A is applied onto the main surface of the plate member 2, and the sealer 32A is fixed onto the rough surfaces 2b of the plate member 2 by the anchoring effect. In the second primer-coating process, base color paint 32B is applied onto the surface of the sealer 32A so that the base color is applied to the plate member 2. As a result, the primer coat 32 is formed.

The first primer-coating process can prevent the primer 32 from peeling off the plate member 2 after the primer 32 is fixed on the plate member 2. The sealer 32A which is used in this process enters the rough surface 2b on the main surface of the plate member so that the primer 32 can be firmly fixed on the plate member 2. More specifically, the sealer 32A is a low-viscosity liquid coating such as polyester or urethane group material, and seals the porous surface of the rough surface 2b of the plate member 2. As a result, the sealer 32A can be firmly fixed on the plate member 2 by the anchoring effect.

The base color paint 32B applies a light color close to white to the main surface of the plate member 2 in the second primer-coating process. The base color paint 32B can almost completely eliminate color unevenness of the primer so that the entire surface of the plate member 2 can be uniformly colored.

In the primer-coating process, an ultraviolet curing coating (UV coating) can be applied onto the surface of the sealer 32A in a process following to the first primer-coating process, or UV coating can be applied onto the surface of the base color paint 32B in a process following to the second primer-coating process. Such a UV coating is quickly cured by ultraviolet radiation. After the UV coating is cured by the ultraviolet radiation, the entire surface of the UV coating can be uniformly ground to a smooth surface by a brush sander or the like. In the case in which such a UV coating is applied onto the sealer 32A or the base color paint 32B, the primer 32 can be tough.

In a finishing process, a transparent or translucent finishing coating material 33 is applied onto the surface of the base color paint 32B. For example, the finishing coating material 33 can be applied by a roll coater in the finishing process. In a process following to the finishing process, also, a UV coating can be applied onto the surface of the finishing coating material 33 which has been applied in the finishing process. In the case in which such a UV coating is applied onto the finishing coating material 33, the surface of the finishing coating material 33 can be tough.

Although the plate member 2 has been described to be bonded to one side of the core member 3 in the aforementioned plastic laminated structure 1, the plate members 2 can be bonded to the both sides of the core member 3. In the case in which the plate members 2 are bonded to the both sides of the plastic laminated structure 1, one of the plate members 2 is first thermally bonded to one surface of the core member 3 by pressing the bonded portions 3A of the core member 3, while another plate member 2 is bonded by an adhesive which is applied on areas between the plate member 2 and the bonded portions 3A of the core member 3, or is bonded by pressing the contact areas between the plate member 2 and the core member 3 in the melted state when the contact areas is heated by using a heater.

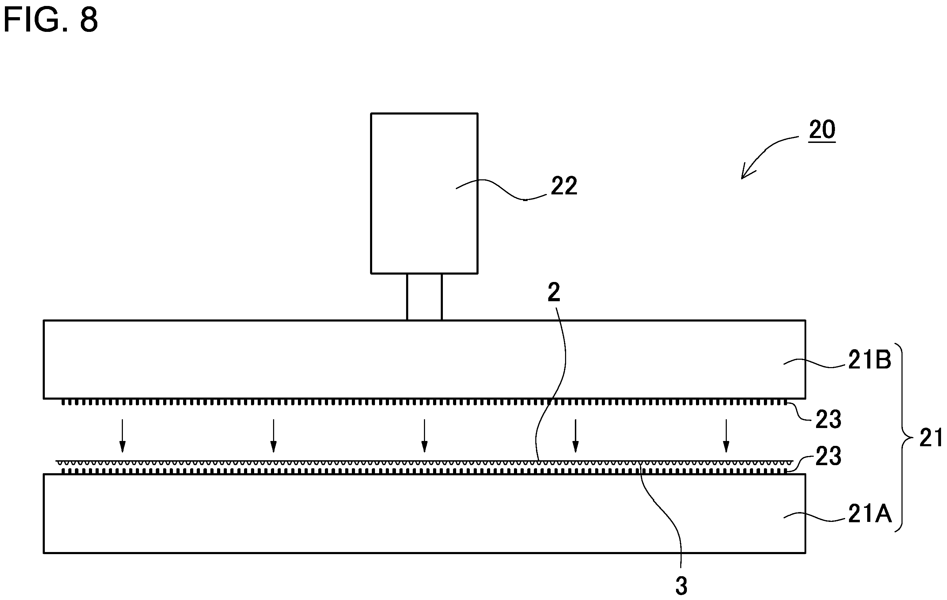

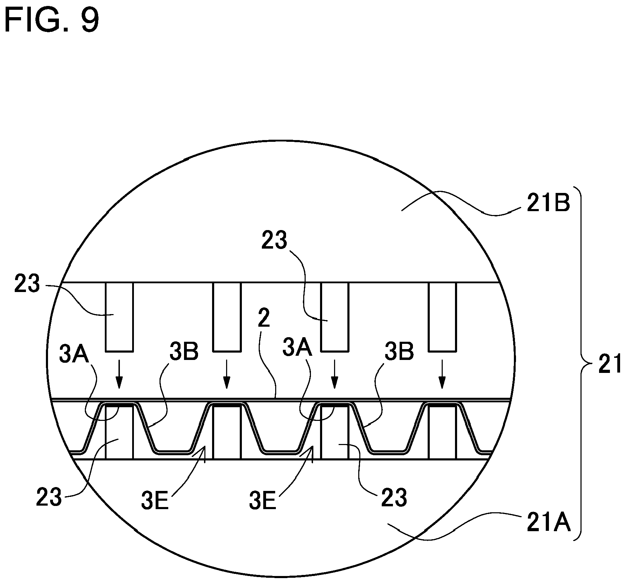

The plate member 2 of the plastic laminated structure 1 shown in Fig. 1 can be also thermally bonded to the core member 3 by a bonding apparatus 20 shown in Figs. 8 and 9. The bonding apparatus 20 includes press protrusions 23 which press and thermally bond the bonded portions 3A of the core member 3 to the plate member 2. In this process, the press protrusions 23 are inserted into areas between the slant portions 3B adjacent to each other and press the bonded portions 3A of the core member 3 so that the plastic of the plate member 2 and the core member 3 is extruded from the contact surfaces between the bonded portion 3A and the plate member 2 to corner gaps, and the core member 3 is bonded to the plate member 2.

The bonding apparatus 20 shown in Figs. 8 and 9 includes a pair of bonding plates (hot plates) 21 which thermally bond the core member 3 to the plate member 2, and a cylinder 22 of an actuator which moves one of the bonding plates 21 upward and downward. The plate member 3 is placed on the core member 2. The lower and upper bonding plates 21A and 21B of the illustrated bonding apparatus 20 press the bonded portions 3A of the core member 3 to the plate member 2 in their heated state whereby thermally bonding them to each other. The lower and upper bonding plates 21A and 21B include the press protrusions 23 on their surfaces opposed to each other. Specifically, the press protrusions 23 are arranged on the opposed surfaces at a pitch corresponding to the bonded portions 3A of the core member 3 to be pressed. The press protrusions 23 of the lower bonding plate 21A of the bonding apparatus are guided to the parallel grooves 3E of the core member 3 so that the press protrusions 23 can be arranged on the bonded portions 3A of the core member 3. After the plate member 2 is placed on the core member 3, the core member 3 and the plate member 2 are bonded by the upper and lower bonding plates 21. The press protrusions 23 which are arranged on the upper and lower bonding plates 21 locally heat and press the core member 3 and the plate member (heat and press their corresponding bonded portions 3A of the core member 3 and their corresponding parts of the main surface of the plate member to be bonded to the bonded portions 3A) so that they are bonded to each other.

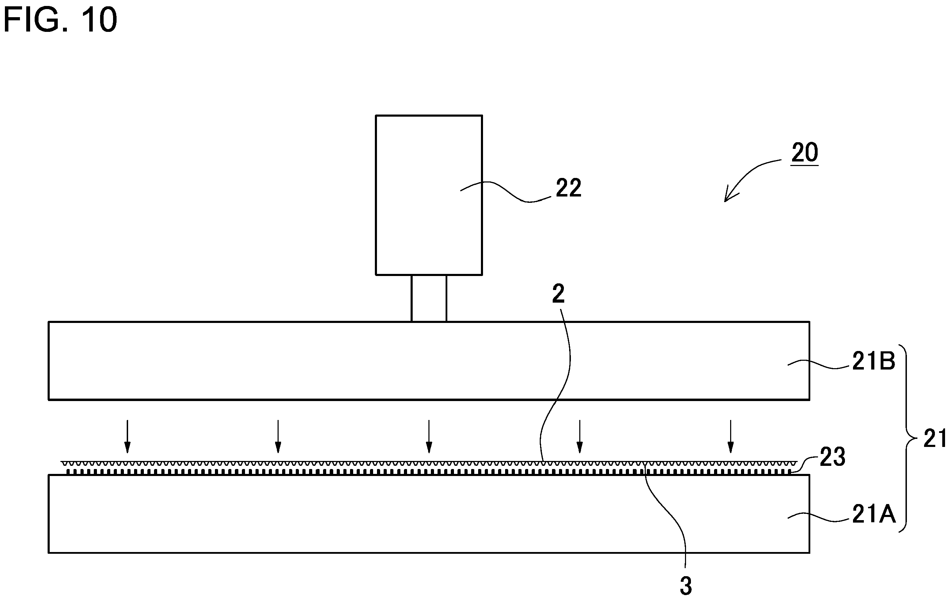

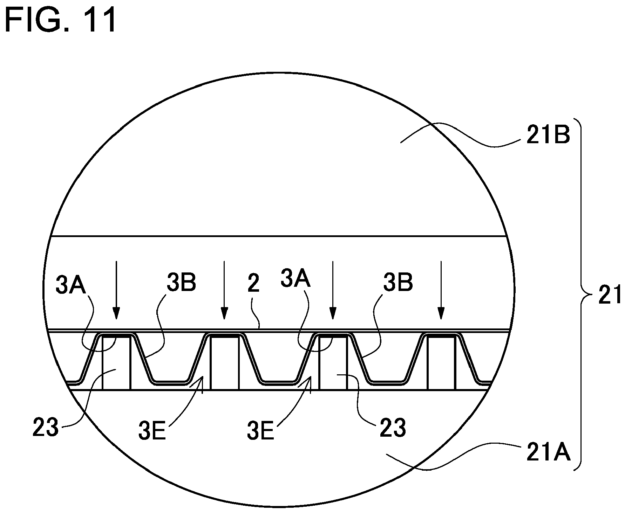

The plate member 2 of the plastic laminated structure 1 shown in Fig. 1 can be also thermally bonded to the core member 3 by a bonding apparatus 20 shown in Figs. 10 and 11. One of the bonding plates 21 of the bonding apparatus 20 which thermally bond the core member 3 onto the plate member 2 has a flat shape, and another bonding plate 21 includes the press protrusions 23. The press protrusions 23 are spaced at a pitch away from each other so that the bonded portions 3A of the core member 3 are pressed by their corresponding press protrusion 23. In the illustrated bonding apparatus 20, the press protrusions 23 are arranged in the lower bonding plate 21A, and the upper bonding plate 21B has a flat shape. The press protrusions 23 of the lower bonding plate 21A are guided into the parallel grooves 3E of the core member 3, and press the bonded portions 3A. The flat press surface of the upper bonding plate 21B presses the main surface of the plate member 2. The core member 3 is placed onto the lower bonding plate 21A of the bonding apparatus 20 after the press protrusions 23 of the lower bonding plate 21A are guided into the parallel grooves 3E of the core member 3. Subsequently, the plate member 2 is placed on the core member 3. The core member 3 and the plate member 2 are then pressed and bonded by the upper and lower bonding plates 21. The press protrusions 23, which are arranged in the lower bonding plate 21A, press the bonded parts 3A of the core member 3 against the plate member 2. The flat surface of the upper bonding plate 21B presses the main surface of the plate member 2. Accordingly, the core member 3 and the plate member 2 in their heated state are bonded to each other after pressed. For example, the core member 3 and the plate member 2 are bonded to each other by cooling them in the pressed and heated state while keeping the pressure. Because this bonding apparatus 20 keeps the main surface of the plate member 2 flat when bonding the trapezoidal wave-shaped core member 3 to the plate member, the main surface of the plate member can be a smooth surface.

In the bonding apparatus 20 shown in Figs. 8 to 11, the plate member 2 and the core member 3 are thermally bonded to each other by pressing them in their heated state by the bonding plates 21. For example, the core member 3 and the plate member 2 are bonded to each other by cooling them in the pressed and heated state while keeping the pressure. In order to cool them, circulation paths for heating and for cooling (not shown) are formed in the bonding plates similar to the forming dies 11. A fluid (e.g., heating oil) circulates through the heating circulation path, and heats the bonding plate 21. Also, a fluid (e.g., cooling water) circulates through the cooling circulation path, and cools the bonding plate 21. The heating circulation path is connected to a heating system which circulatively provides liquid (e.g., hot water or heating oil) or gas (e.g., pressurized steam). The cooling circulation path is connected to a cooling system which circulatively provides liquid such as cooling water and a refrigerant which can provide a cooling effect by heat of vaporization when evaporated. The heating system heats the fluid so that the heated fluid circulates through the circulation path of the bonding plate 21. The cooling system cools the fluid so that the cooled fluid circulates through another circulation path of the bonding plate 21. Induction heating, plug heater, or the like can be used for the heating system. Also, air cooling may be used for the cooling system. In other words, the heating and cooling systems are not specifically limited.

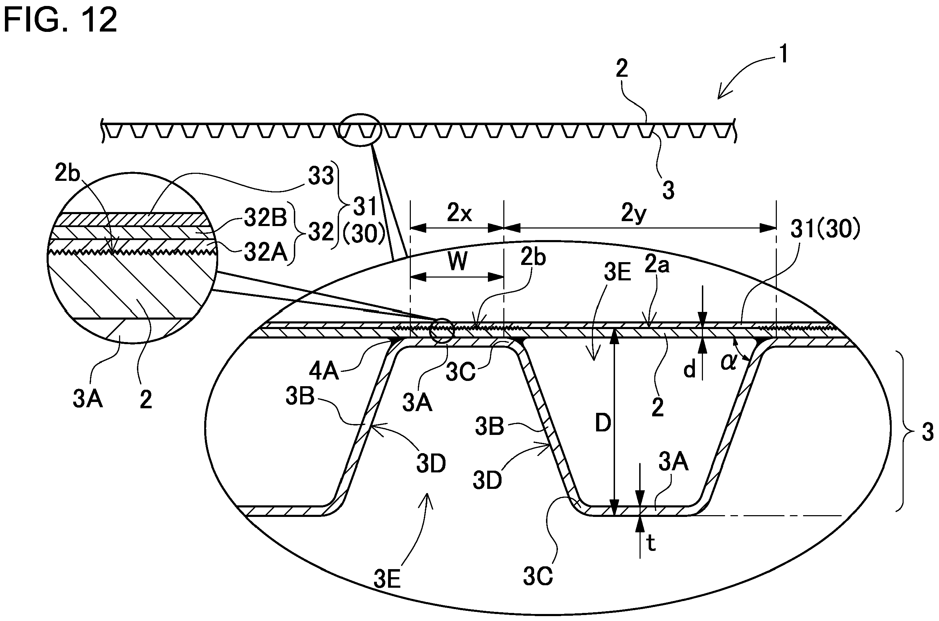

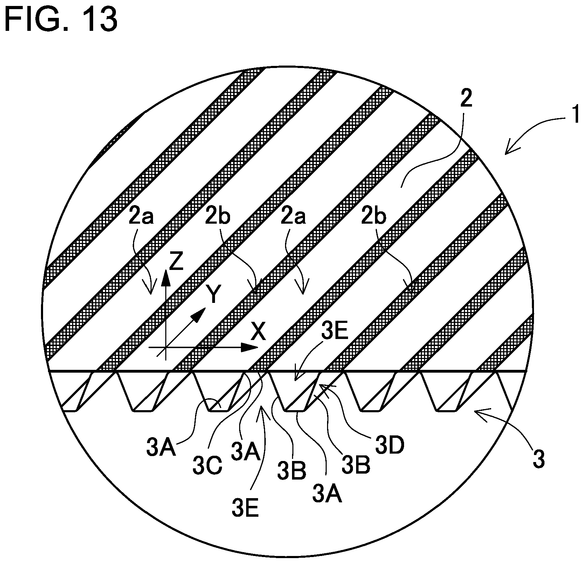

Also, the plastic laminated structure 1 can have a structure shown in Figs. 12 and 13. In the surface of the plate member 2 of the illustrated plastic laminated structures 1, a bonded part 2x in which the bonding portion 3A of the core member 3 are thermally bonded onto a back surface of the plate member serves as the rough surface 2b, and a non-bonded part 2y in which the core member 3 is not thermally bonded onto the back surface serves as the smooth surface 2a. The rough surface 2b has larger roughness than the smooth surface 2a. The smooth surfaces 2a and the rough surfaces 2b are alternately arranged in stripes. In this plastic laminated structure 1, in the process for bonding the bonded portions 3A of the core member 3 to the plate member 2, the rough surface is formed by melting the thermoplastic resin of the bonded portions 3A of the core member 3 and the plate member 2 to be bonded to each other. The melted bonded portions 3A and plate member 2 are bonded to each other by pressing them in their heated state against each other. In this bonding process, the thermoplastic resin of the bonded portions 3A and the plate member 2 will have sinks or voids when cured. Because the melted thermoplastic resin has sinks or voids when cured, very small asperities are formed on the surface of the thermoplastic resin so that the rough surface 2b is formed in the surface in the bonded part 2x.

In particular, because the contact areas between the bonded portions 3A of the core member 3 and the plate member 2 are strongly pressed by the press protrusions, the thermoplastic resin of the core member 3 and the plate member 2 can be surely heated to its melting temperature. As a result, the thermoplastic resin of the core member 3 and the plate member 2 can be surely melted so that the core member 3 and the plate member 2 can be integrally bonded to each other. At this time, because the thermoplastic resin in the areas which are strongly pressed by the press protrusions can be surely heated to its melting temperature, such very small asperities can be formed on the surface of the thermoplastic resin when the melted the thermoplastic resin is cured. Accordingly, in this plastic laminated structure 1, in the bonded parts 2x in which the bonded positions 3A of the core member 3 are thermally bonded to the plate member 2, the thermoplastic resin is surely melted so that the rough surface 2b is formed, while in the non-bonded parts 2y in which the bonded positions 3A of the core member 3 are not thermally bonded to the plate member 2, the thermoplastic resin melting is limited so that the rough surface 2b is not formed but the smooth surface 2a is formed. In this plastic laminated structure 1, the rough and smooth surfaces 2b and 2a are formed on the bonded and non-bonded parts 2x and 2y of the plate member 2, respectively, by thermally bonding the bonded portions 3A of the trapezoidal wave-shaped core member 3 to the plate member 2. As a result, the stripe-shaped rough and smooth surfaces 2b and 2a can be alternately formed on the surface of the plate member. The surface treatment layer 30 can be more firmly fixed on the surface of the plate member 2 by the anchoring effect of the rough surfaces 2b which are formed on the surface of the plate member 2.

### EXAMPLE 1

The plastic laminated structure 1 shown in Fig. 1 can be produced by the following processes.

In this illustrated plastic laminated structure 1, the plate member 2 is bonded to one side of the core member 3.

The plate and core members 2 and 3 are formed of carbon-fiber-reinforced plastic which includes nylon 6 and carbon fibers embedded in the nylon 6.

The mixing ratio of nylon 6 to carbon fibers in the carbon fiber reinforced plastic is 75:25 in volume ratio. The entire specific gravity of the carbon fiber reinforced plastic is 1.32.

The carbon fibers are three-dimensionally integrally arranged at random orientations and embedded in the nylon 6 in the carbon fiber reinforced plastic.

The thickness (d, t) of the plate member 2 and the core member 3 is 0.3 mm.

The core member 3 has a trapezoidal wave shape which is obtained by connecting the bonded portions 3A to the slant portions 3B of the inclined surface 3D. The width (W) of the bonded portion 3A is 1.6 mm. The inclination angle (α) between the slant portion 3B and the plate member 2 is 70°. The entire thickness (D) of the plastic laminated structure 1 is 3 mm. It can be said that the trapezoidal wave shape is formed of high wave.

The plate member 2 and the core member 3 are thermally bonded by the pair of hot plates 26 to each other as shown in Figs. 5 and 6. The press protrusions 28 which can press the bonded portions 3A of the core member 3 against the plate member 2 are arranged on the hot plate 26 as shown in Fig. 6. The bonded portions 3A and the plate member 2 are pressed by the press protrusions 28 of the hot plate 26 so that the plate member 2 and the core member 3 are melted. Subsequently, they are cooled and finally thermally bonded to each other.

The bonded parts 2x to which the bonded portions 3A of the core member 3 are thermally bonded, and the non-bonded parts 2y to which the core member 3 is thermally not bonded are alternately arranged in stripes on the plate member 2. After the core member 3 is thermally bonded to the back surface, the bonded parts 2x of the plate member 2 are cooled while tightly contacting the surface of the lower hot plate 26A. As a result, the surface of the bonded part 2x can serve as the smooth surface 2a. The surfaces of the non-bonded parts 2y of the plate member 2 do not tightly contact the lower hot plate 26A when cooled. Accordingly, the melted thermoplastic resin in the non-bonded parts 2y will move on their surfaces. As a result, the surface of the non-bonded parts 2y can serve as the rough surface 2b.

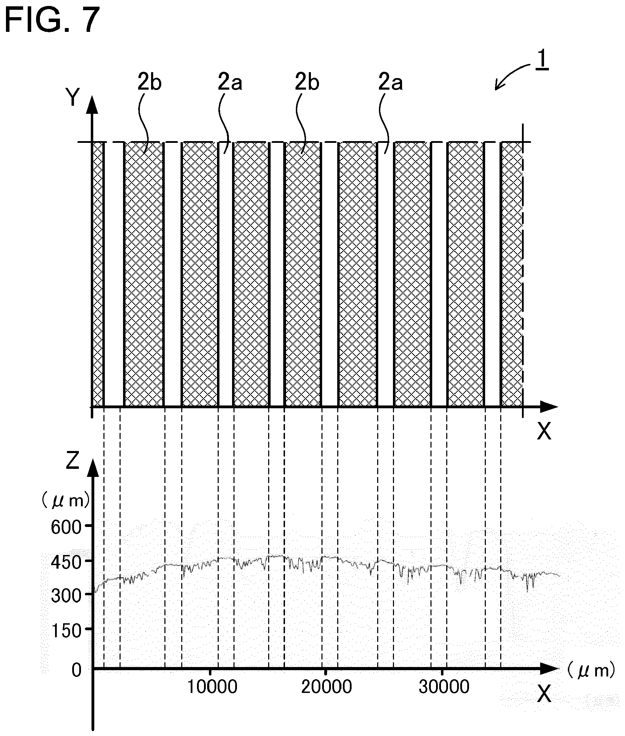

The plastic laminated structure 1 which is produced in the aforementioned processes includes the smooth and rough surfaces 2a and 2b which are alternately formed on the main surface of the plate member in stripes as shown in a plan view of Fig. 7. The rough surfaces 2b are shown by crosshatching in Fig. 7 for ease of identification between the smooth surfaces 2a and the rough surfaces 2b. Fig. 7 also shows a measurement result of the surface states of the smooth surface 2a and the rough surface 2b which are formed on the main surface of the plate member. The result is measured by a non-contact three-dimensional measuring device (NH-3N manufactured by Mitaka Kohki Co., Ltd). The specification of the non-contact three-dimensional measuring device and the measurement conditions are as follows.

The roughness of the surface of a measurement object is measured by a non-contact laser probe. The surface of the measurement object is probed by irradiation with a spot laser beam so that the dimensions (width and height) of the surface of the measurement object are measured.
Measurement range ... XY: 150 mm, Z: 100 mm
Measurement Accuracy ... XY: (1 + 5L/150) µm, Z: (1 + 5L/100) µm
Resolution ... XY: 0.1 µm, Z: 0.01 µm

As shown in Fig. 7, the rough surfaces 2b which have larger roughness than the smooth surfaces 2a are formed in stripes on the main surface of the plate member. In the case in which the surface treatment layer 30 is formed on the main surface of the plate member of the plastic laminated structure 1, the surface treatment layer 30 can be firmly fixed by the anchoring effect of the rough surfaces 2b.

On the surface of the plastic laminated structure 1 which is produced by the aforementioned processes, the coating 31 is formed by the following primer-coating and finishing processes.

### (1) Primer-Coating Process

The sanding sealer 32A is applied in the first primer-coating process. In the process following to the first primer-coating process, a UV coating which can be cured by ultraviolet radiation is applied onto the surface of the sanding sealer 32A after the sanding sealer 32A is cured. After the UV coating is cured by ultraviolet radiation, the surface of the UV coating is ground smooth. The UV coating is ground by a brush sander. Subsequently, the base color paint 32B is applied thick by a flow rotor, and almost completely eliminate the primer or original color, in other words, the main surface of the plate member 2 is colored white in the second primer-coating process. After the base color paint 32B is cured, a UV coating is additionally applied onto the surface of the base color paint 32B in the process subsequent to the second primer-coating process. After the UV coating is cured by ultraviolet radiation, the surface of UV coating is ground smooth.

### (2) Finishing Process

After the surface of the plastic laminated structure 1 is colored in the primer coat process, the transparent finishing coating material 33 is applied onto the main surface of the plate member 2. The transparent finishing coating material 33 is applied by a roll coater in the finishing process. In the finishing process, a urethane, polyester, or acrylic group coating material is applied as the coating material 33. After this coating material is cured, a transparent UV coating (not shown) is applied onto the surface of the finishing coating material 33 in the process following to the finishing process. A urethane group UV coating is used as the ultraviolet curing coating, for example.

The plastic laminated structure 1 which is produced by the aforementioned processes can be lightweight but has high flexural rigidity, and can firmly hold the coating 31 which is fixed on the main surface of the plate member by the anchoring effect of the rough surfaces 2b in the main surface of the plate member. The surface of the plate member of the aforementioned plastic laminated structure 1 can have smooth surface which can provide good appearance. In addition, the plate member does not peel off even after repeatedly bent between a flat state and a bent state in which the plastic laminated structure is bent at a 90° angle in radius of curvature 1 cm 1000 times. That is, the plastic laminated structure has high bonding strength which can prevent the plate member from peeling off even after this 1000-time bending test. Additionally, the plastic laminated structure can have one-ninth of the weight of high tensile steel with thickness of 0.65 mm which can be used for vehicle body sheet steel and flexural rigidity seven times higher than the high tensile steel.

### EXAMPLE 2

The plastic laminated structure 1 shown in Fig. 12 can be produced by the following processes. In this illustrated plastic laminated structure 1, the plate member 2 is bonded to one side of the core member 3. The plate and core members 2 and 3 are formed of carbon-fiber-reinforced plastic which includes polyvinyl chloride as the thermoplastic resin and carbon fibers as the reinforcing fibers embedded in the polyvinyl chloride. The mixing ratio of polyvinyl chloride to carbon fibers in the carbon fiber reinforced plastic is 75:25 in volume ratio. The entire specific gravity of the carbon fiber reinforced plastic is 1.5. The carbon fibers are orientated in one direction and embedded in the polyvinyl chloride in the carbon fiber reinforced plastic. The thickness (d, t) of the plate member 2 and the core member 3 is 0.3 mm. The core member 3 has a trapezoidal wave shape which is obtained by connecting the bonded portions 3A to the slant portions 3B of the inclined surface 3D. The width (W) of the bonded portion 3A is 1.6 mm. The inclination angle (α) between the slant portion 3B and the plate member 2 is 70°. The entire thickness (D) of the plastic laminated structure 1 is 3.0 mm. It can be said that the trapezoidal wave shape is formed of high wave.

The plate member 2 and the core member 3 are placed on one another and thermally bonded to each other by heating them by a pair of bonding plates 21 as shown in Figs. 10 and 11. When the core member 3 and the plate member 2 are placed on one another, the orientation direction (X direction in Fig. 13) of the reinforcing fibers, which are embedded in the fiber-reinforced plastic of the plate member 2, intersects the extension direction (Y direction in Fig. 13) of the parallel grooves 3E of the core member 3. The press protrusions 23 which can press the bonded portions 3A of the core member 3 against the plate member 2 are arranged on the bonding plate 21 as shown in Fig. 11. The bonded portions 3A and the plate member 2 are brought into a pressed and heated state and are then pressed and cooled by the press protrusions 23 of the bonding plate 21 so that the melted plate member 2 and core member 3 are thermally bonded to each other.

The bonded parts 2x to which the bonded portions 3A of the core member 3 are thermally bonded, and the non-bonded parts 2y to which the core member 3 is thermally not bonded are alternately arranged in stripes on the plate member 2. After the core member 3 is thermally bonded to the back surface, the bonded parts 2x of the plate member 2 are formed by melting the thermoplastic resin of the plate member 2 as the rough surface 2b which has very small asperities. In the non-bonded parts 2y of the plate member 2, because the core member 3 is not thermally bonded to the back surface of the plate member 2, the melting of the thermoplastic resin of the plate member 2 is limited so that such asperities are not formed and the smooth surface 2a is formed.

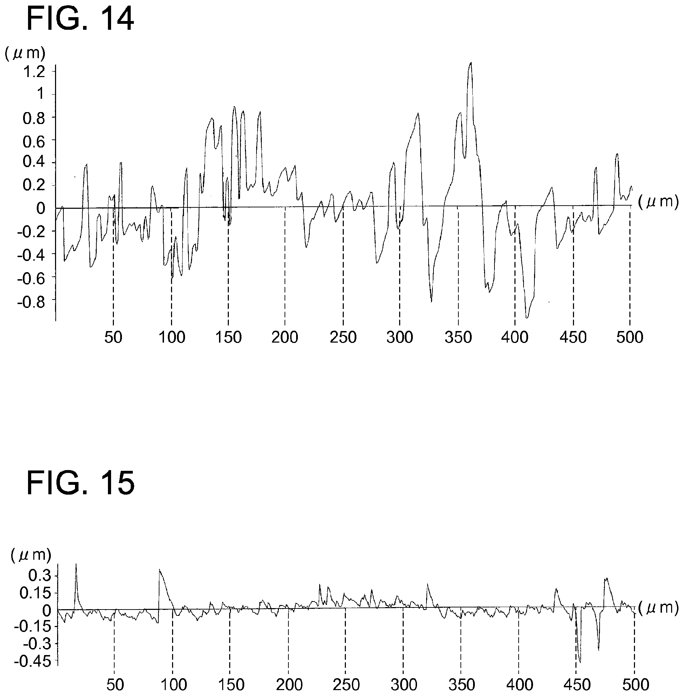

The plastic laminated structure 1 which is produced in the aforementioned processes includes the smooth and rough surfaces 2a and 2b which are alternately formed on the surface of the plate member in stripes as shown in a perspective view of Fig. 13. The rough surfaces 2b are shown by crosshatching in Fig. 13 for ease of identification between the smooth surfaces 2a and the rough surfaces 2b. Figs. 14 to 17 also show measurement results of the surface states of the smooth surface 2a and the rough surface 2b which are formed on the surface of the plate member. The results are measured by the non-contact three-dimensional measuring device. In the measurement, a non-contact laser probe is used, and the surface of the measurement object is probed by irradiation with a spot laser beam so that the height of the surface of the measurement object are measured accordance with its corresponding measurement direction.

Figs. 14 to 17 show the roughness of the plate member surface in the following measurement directions. In these graphs, the horizontal axes indicate positions in the X or Y direction, and the vertical axes indicate displacement the Z direction (height).
Fig. 14 ... The roughness of the rough surface 2b in the bonded part 2x in the X direction.
Fig. 15 ... The roughness of the smooth surface 2a in the non-bonded part 2y in the X direction.

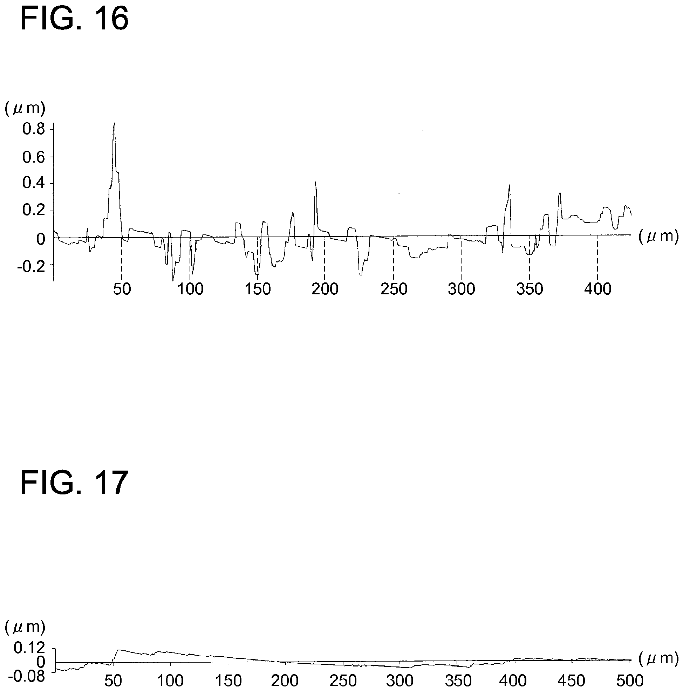

Fig. 16 ... The roughness of the rough surface 2b in the bonded part 2x in the Y direction.
Fig. 17 ... The roughness of the smooth surface 2a in the non-bonded part 2y in the Y direction.

These graphs show that the smooth surface 2a is formed in the non-bonded part 2y, and the rough surface 2b having larger roughness than the smooth surface 2a is formed in the bonded part 2x on the plate member surface. As shown in Fig. 13, the rough surface 2b and the smooth surface 2a are formed in stripes. In the case in which, the surface treatment layer 30 is formed on the surface of the plate member of the plastic laminated structure 1, the surface treatment layer 30 can be firmly fixed by the anchoring effect of the rough surfaces 2b.

On the surface of the plastic laminated structure 1 which is produced by the aforementioned processes, the coating 31 is formed similar to the example 1. Similar to the example 1, the plastic laminated structure 1 which is produced by the aforementioned processes can be lightweight but has high flexural rigidity, and can firmly hold the coating 31 which is fixed on the surface of the plate member by the anchoring effect of the rough surfaces 2b in the surface of the plate member.

The plastic laminated structure according to the present invention which includes the smooth and rough surfaces arranged on its surface can be effectively used for vehicle body sheet steel, mobile phone cases, and the like as a plastic laminated structure which can firmly hold a surface treatment layer on its surface whereby preventing the surface treatment layer from peeling off instead of metal plate.

It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

## Claims

1. A plastic laminated structure (1) comprising:
a plate member (2) of plate-shaped fiber-reinforced plastic that includes a thermoplastic resin and reinforcing fibers embedded in the thermoplastic resin; and
a core member (3) of trapezoidal-wave-shaped fiber-reinforced plastic that is thermally bonded to the plate member (2), and includes a thermoplastic resin and reinforcing fibers embedded in the thermoplastic resin,
wherein a part of or the entire area of a main surface of the plate member (2) includes smooth and rough surfaces (2a, 2b), and first asperities are formed on the rough surface (2b) on the main surface side, and
wherein the smooth and rough surfaces (2a, 2b) are alternately arranged in stripes.

2. The plastic laminated structure (1) according to claim 1, wherein the smooth surface (2a) has second asperities, and the difference between first asperities is greater than the second asperities.

3. The plastic laminated structure (1) according to claim 1 or 2, wherein the rough surface (2b) of the plate member (2) is formed by the reinforcing fibers which are embedded in the thermoplastic resin.

4. The plastic laminated structure (1) according to any of claims 1 to 3, wherein the rough surface (2b) of the plate member (2) is formed by the reinforcing fibers that are embedded in the thermoplastic resin and protrudes from a surface of the thermoplastic resin.

5. The plastic laminated structure (1) according to any of claims 1 to 4,
wherein the trapezoidal wave shape of the core member (3) is formed by alternately arranging slant portions (3B) and bonded portions (3A) so that parallel grooves (3E) are arranged at a predetermined pitch alternately on the both sides of the core member (3), and
wherein a bonded part that is formed by thermally bonding the bonded portion (3A) of the core member (3) onto a back surface of the plate member (2) serves as the smooth surface (2a), and a non-bonded part onto which the core member (3) is not thermally bonded serves as the rough surface (2b).

6. The plastic laminated structure (1) according to any of claims 1 to 4,
wherein the trapezoidal wave shape of the core member (3) is formed by alternately arranging slant portions (3B) and bonded portions (3A) so that parallel grooves (3E) are arranged at a predetermined pitch alternately on the both sides of the core member (3), and
wherein a bonded part that is formed by thermally bonding the bonding portions (3A) of the core member (3) onto a back surface of the plate member (2) serves as the rough surface (2b), and a non-bonded part onto which the core member (3) is not thermally bonded serves as the smooth surface (2a).

7. The plastic laminated structure (1) according to any of claims 1 to 6, wherein a surface treatment layer is formed on the main surface of the plate member (2).

8. The plastic laminated structure (1) according to claim 7, wherein the surface treatment layer is a coating.

9. The plastic laminated structure (1) according to claim 8, wherein the surface treatment layer is a coating of laminated structure that includes a primer and a finishing coating material laminated on the primer.

10. The plastic laminated structure (1) according to any of claims 1 to 9, wherein the plate member (2) is thermally bonded to one side of the core member (3).

11. The plastic laminated structure (1) according to any of claims 1 to 9, wherein the plate members (2) are thermally bonded to the both sides of the core member (3).

12. The plastic laminated structure (1) according to any of claims 1 to 11, wherein the fiber-reinforced plastic of the plate member (2) and the core member (3) includes carbon fibers as the reinforcing fibers embedded in the thermoplastic resin.

13. The plastic laminated structure (1) according to any of claims 1 to 12, wherein the thermoplastic resin of the fiber-reinforced plastic is selected from the group consisting of nylon, polycarbonate, acrylic resin, PET, PP, PPS, HTPE, phenoxy resin, and polyvinyl chloride.

14. A method for producing a plastic laminated structure (1) including a plate member (2) of plate-shaped fiber-reinforced plastic that includes a thermoplastic resin and reinforcing fibers embedded in the thermoplastic resin; and a core member (3) of trapezoidal-wave-shaped fiber-reinforced plastic that is thermally bonded to the plate member (2), and is formed of a thermoplastic resin and reinforcing fibers embedded in the thermoplastic resin, the core member (3) including slant portions and bonded portions that are arranged alternately whereby forming parallel grooves that are alternately arranged on the both sides,
wherein the method comprising:
placing the core member (3) on the plate member (2);
inserting press protrusions (23; 28) into their corresponding parallel grooves (3E) of the core member (3); and
bonding the bonded portions (3A) of the core member (3) to the plate member (2) by pressing the bonded portions (3A) of the core member (3) by the press protrusions (23; 28) whereby bonding the bonded portions (3A) of the core member (3) to the plate member (2).

15. The method for producing a plastic laminated structure (1) according to claim 14, wherein the bonded portions (3A) of the core member (3) are bonded to the plate member (2) by thermally melting the thermoplastic resin of the plate member (2) and the core member (3) in the bonding step.
